# EUROPEAN PATENT SPECIFICATION

(11) **EP 2 546 685 B1**
(45) Date of publication and mention of the grant of the patent: **28.11.2018**
(21) Application number: 12156445.4
(22) Date of filing: 22.02.2012
(51) Int. Cl.: G02B 6/00

(54) **Backlight unit and display apparatus using the same**
Rückbeleuchtungseinheit und Anzeigevorrichtung damit
Unité de rétroéclairage et appareil d'affichage doté de celle-ci

(30) Priority: 15.07.2011 KR 20110070376
(43) Date of publication of application: 16.01.2013
(73) Proprietor: LG Innotek Co., Ltd., Seoul, 04637 (KR)
(72) Inventor: Jung, Sang Hyeok, 100-714 Seoul (KR); Kim, Moon Jeong, 100-714 Seoul (KR); Kim, Jeong Hwan, 100-714 Seoul (KR)
(74) Representative: Zardi, Marco

(56) References cited:
- EP-A2- 2 081 079
- WO-A1-2010/058625
- WO-A1-2010/064473
- US-A1- 2008 266 879
- US-A1- 2010 073 911
- US-A1- 2011 013 376
- US-A1- 2011 050 558

## Description

### CROSS REFERENCE TO RELATED APPLICATION

This application claims the benefit of Korean Patent Application No. 10-2011-0070376, filed in Korea on July 15, 2011.

### TECHNICAL FIELD

Present inventions relate to a backlight unit and a display apparatus using the same.

### BACKGROUND

In general, as a representative large-scale display apparatus, a liquid crystal display (LCD) or a plasma display panel (PDP) is used.

Differently from the PDP of a self-emitting type, the LCD essentially requires a separate backlight unit due to absence of self-emitting light emitting devices.

Backlight units used in LCDs are divided into an edge type backlight unit and a direct type backlight unit according to positions of light sources. In the edge type backlight unit, light sources are disposed on side surfaces of an LCD panel and a light
guide plate is used to uniformly distribute light throughout the overall surface of the LCD panel, and thus uniformity of light is improved and the panel has an ultrathin thickness.

In the direct type backlight unit which is generally used in displays having a size of 20 inches or more, a plurality of light sources is disposed under a panel. Thus, the direct type backlight unit has excellent optical efficiency, as compared to the edge type backlight unit, thereby being mainly used in large-scale displays requiring high brightness.

As light sources of the conventional edge type or direct type backlight unit, cold cathode fluorescent lamps (CCFLs) are used.

However, a backlight unit using CCFLs may consume a considerable amount of power because power is applied to the CCFLs at all times, exhibit a color reproduction rate of about 70% that of a CRT, and cause environmental pollution due to addition of mercury.

In order to solve these problems, research into a backlight unit using light emitting diodes (LEDs) has been conducted now.

If LEDs are used as the backlight unit, an LED array may be partially turned on/off and thus power consumption may be considerably reduced. Particularly, RGB LEDs exceed 100% of national television system committee (NTSC) color reproduction range specifications, thus providing a more vivid image to consumers. US 2011/013376, US 2011/050558 A1, and EP 2081079 discloses backlight units with a light guide plate having upper and lower grooves, wherein light source modules are within the second grooves. However, the arrangement of grooves disclosed in the mentioned prior art documents is not adapted to reduce reducing dark regions in the light guide plate.

### SUMMARY

Present invention provides a backlight unit according to claim 1; disclosed is a back light unit which forms grooves at designated areas of the upper surface of a light guide plate to reduce dark regions, and a display apparatus using the same.
In one present invention, a backlight unit includes a light guide plate including first and second grooves, and light source modules disposed within the second grooves, wherein the first grooves are disposed on the upper surface of the light guide plate, and the second grooves are disposed on the lower surface of the light guide plate, and the first grooves are disposed between light sources of the light source module.

As disclosed, one side end of each of the first grooves may be disposed on an extension line extending from the side surface of each of the second grooves, or be separated from the extension line extending from the side surface of each of the second grooves by a designated interval.

The cross-section of each of the first grooves may include a first inclined surface and a second inclined surface meeting at one point. The first inclined surface may be a concave surface having a first curvature, the second inclined surface may be a concave surface having a second curvature, and the first curvature and the second curvature may be different.
The first inclined surface may be a flat surface inclined at a first angle with respect to the upper surface of the light guide plate, the second inclined surface may be a flat surface inclined at a second angle with respect to the upper surface of the light guide plate, and the first angle and the second angle may be different.

One of the first and second inclined surfaces may be a concave surface having a designated curvature, and the other of the first and second inclined surfaces may be a flat surface inclined at a designated angle with respect to the upper surface of the light guide plate.

Otherwise, the cross-section of each of the first grooves may include a first inclined surface and a second inclined surface, and a flat surface parallel with the upper surface of the light guide plate may be disposed between the first and second inclined surfaces.

The first grooves may have a height of 0.1∼0.5mm, and the maximum depth of the first grooves may be smaller than a distance from the upper surface of the light guide plate to the second grooves.

The length of the first grooves may be a distance between both ends of the first grooves disposed in a first direction, the width of the first grooves may be a distance between both ends of the first grooves disposed in a second direction perpendicular to the first direction, and the length and width of the first grooves may be smaller than a distance between the light sources of the light source module.

Here, the length of the first grooves may be 3∼7mm, and the width of the first grooves may be 1∼4mm.

The light guide plate may further include third grooves disposed between the adjacent first grooves, and the third grooves may be disposed corresponding to the respective light sources of the light source module.

The length and width of the third grooves may be smaller than the length and width of the first grooves, the depth of the third grooves may be smaller than the depth of the first grooves, and a ratio of the depth of the third grooves to the depth of the first grooves may be 1:1.5∼3.

Each of the third grooves may be separated from one side of each of the second grooves by a designated interval, and the length of the third grooves may be greater than the length of the respective light sources of the light source module.

### BRIEF DESCRIPTION OF THE DRAWINGS

Arrangements and present inventions may be described in detail with reference to the following drawings in which like reference numerals refer to like elements and wherein:
FIG. 1 is a cross-sectional view illustrating a backlight unit in accordance with an embodiment as disclosed;
FIG. 2 is a cross-sectional view illustrating a position at which a first groove of a light guide plate is disposed according to an embodiment as disclosed;
FIG. 3A to 3C are cross-sectional views illustrating position relations between first grooves and second grooves of the light guide plate according to an embodiment as disclosed;
FIGs. 4A to 4E are cross-sectional views illustrating various shapes of first grooves of the light guide plate;
FIG. 5 is a plan view illustrating the positions of the first grooves of the light guide plate;
FIG. 6 is a plan view illustrating the positions of third grooves of the light guide plate according to an embodiment as disclosed;
FIGs. 7A and 7B are views illustrating refraction of light according to presence and absence of the first groove of the light guide plate;
FIG. 8 is a cross-sectional view illustrating a display module having a backlight unit in accordance with one present invention; and
FIGs. 9 and 10 are views respectively illustrating display apparatuses in accordance with present inventions.

### DESCRIPTION OF SPECIFIC PRESENT INVENTIONS

Hereinafter, present inventions will be described with reference to the annexed drawings.

It will be understood that when an element is referred to as being "on" or "under" another element, it can be directly on/under the element, and one or more intervening elements may also be present.

When an element is referred to as being "on" or "under", "under the element" as well as "on the element" can be included based on the element.

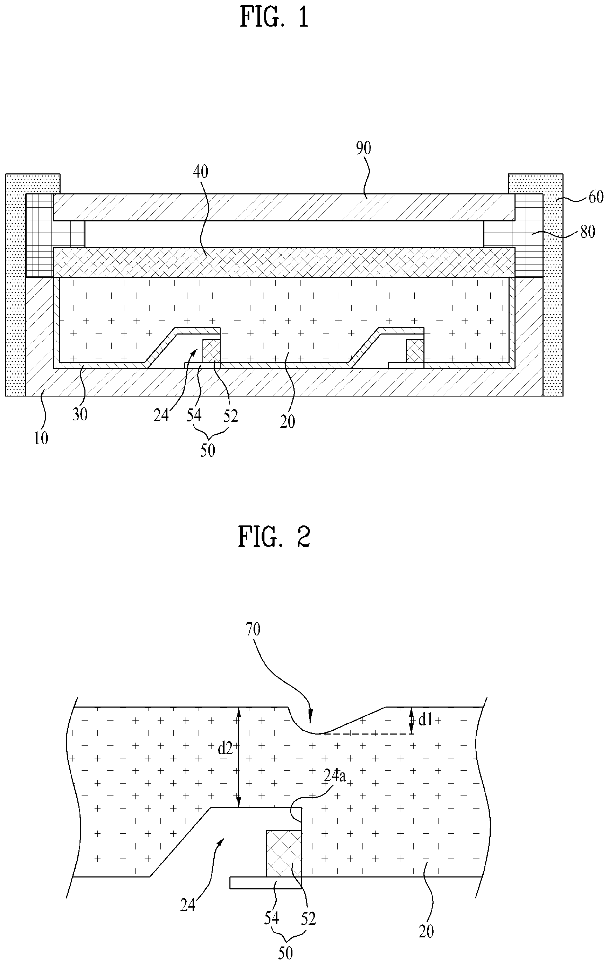

FIG. 1 is a cross-sectional view illustrating a backlight unit in accordance with one present invention.

As shown in FIG. 1, the backlight unit includes a light guide plate 20 having first and second grooves 70 and 24, a reflector 30, optical member 40, and light source modules 50.

The backlight unit may further include a top chassis 60, a bottom chassis 10, and a panel guide module 80.

Here, the panel guide module 80 may support a display panel 90, and the top chassis 60 may be connected to the panel guide module 80 and the bottom chassis 10.

At least one first groove 70 may be disposed on the upper surface of the light guide plate 20, and at least one second groove 24 may be disposed on the lower surface of the light guide plate 20.

Here, the first groove 70 of the light guide plate 20 may have a hemispheric, triangular, or trapezoidal cross-section.

That is, the cross-section of the first groove 70 may include a first inclined surface and a second inclined surface meeting at one point. The first inclined surface may be a concave surface having a first curvature, the second inclined surface may be a concave surface having a second curvature, and the first curvature and the second curvature may be different.

According to circumstance, the first inclined surface may be a flat surface inclined at a first angle with respect to the upper surface of the light guide plate 20, the second inclined surface may be a flat surface inclined at a second angle with respect to the upper surface of the light guide plate 20, and the first angle and the second angle may be different.

Further, one of the first and second inclined surfaces may be a concave surface having a designated curvature, and the other of the first and second inclined surfaces may be a flat surface inclined at a designated angle with respect to the upper surface of the light guide plate 20.

As an another example, the cross-section of the first groove 70 may include a first inclined surface and a second inclined surface, and a flat surface parallel with the upper surface of the light guide plate 20 may be disposed between the first and second inclined surfaces.

The first groove 70 having the above shape may be disposed at one side of the second groove 24, and may be disposed between light sources 52 of the light source module 50.

Here, the first groove 70 may have a depth of about 0.1∼0.5 mm, and the maximum depth value of the first groove 70 may be smaller than a distance value between the upper surface of the light guide plate 20 and the second groove 24.

The length of the first groove 70 means a distance between both ends of the first groove 70 disposed in a first direction, the width of the first groove 70 means a distance between both ends of the first groove 70 in a second direction perpendicular to the first direction, and the length and width of the first groove 70 may be smaller than the distance between the light sources 52 of the light source module 50.

Here, the length of the first groove 70 may be about 3∼7 mm, and the width of the first groove 70 may be about 1∼4 mm.

The second groove 24 disposed on the lower surface of the light guide plate 20 has a trapezoidal cross-section.

If the second groove 24 of the light guide plate 20 has a trapezoidal cross-section, from among a first side surface and a second side surface of the second groove 24 opposite each other, the first side surface of the second groove 24 may be perpendicular to the bottom surface of the second groove 24, and the second side surface of the second groove 24 may be inclined at a first angle with respect to the bottom surface of the second groove 24.

Otherwise, if the second groove 24 of the light guide plate 20 has a trapezoidal cross-section, the first and second side surfaces of the second groove 24 opposite each other may be inclined with respect to the bottom surface of the second groove 24, and an angle between the first side surface and the bottom surface of the second groove 24 may be smaller than an angle between the second side surface and the bottom surface of the second groove 24.

Further, if the second groove 24 of the light guide plate 20 of a comparative example has a triangular cross-section, an angle between first and second side surfaces opposite each other of the second groove 24 may be about 30° to 120°.

Further, a ratio of the height of the second groove 24 of the light guide plate 20 to the overall thickness of the light guide plate 20 may be about 0.3∼0.7:1.

The light guide plate 20 may be formed of at least one selected from among the group consisting of acrylic resins, such as polymethylmethacrylate (PMMA), polyethylene terephthalate (PET), cyclic olefin copolymers (COCs), polyethylene naphthalate (PEN), polycarbonate (PC), polystyrene (PS) and methacrylate styrene (MS) resins.

The light source modules 50 may be disposed within the second grooves 24 of the light guide plate 20.

Here, each light source module 50 may include a substrate 54 and at least one light source 52 disposed on the substrate 54. Both the substrate 54 and the at least one light source 52 may be disposed within the second groove 24 of the light guide plate 20.

According to circumstance, the substrate 54 may be disposed at the outside of the second groove 24 of the light guide plate 20, and the at least one light source 52 may be disposed within the second groove 24 of the light guide plate 20.

The substrate 54 may include an electrode pattern to be electrically connected to the light source 52, and may be a printed circuit board (PCB) formed of at least one selected from the group consisting of polyethylene terephthalate (PET), glass, polycarbonate (PC) and silicon (Si), or be formed as a film.

Further, the substrate 54 may selectively employ a single layer PCB, a multilayer PCB, a ceramic substrate, a metal core PCB, etc.

The at least one light source 52 may be disposed on the substrate 54, and the light source 52 may be a side view type LED.

According to circumstance, the light source 52 may be a top view type LED.

As described above, the light source 52 may be an LED chip, and the LED chip may be a blue LED chip or an ultraviolet LED chip, or a package in which at least one of a red LED chip, a green LED chip, a blue LED chip, a yellow green LED chip and a white LED chip are combined.

Here, the white LED may be produced by combining a yellow phosphor with a blue LED, by using both a red phosphor and a green phosphor on a blue LED, or by using a yellow phosphor, a red phosphor and a green phosphor on a blue LED.

The reflector 30 is disposed on the lower surface of the light guide plate 20.

That is, the reflector 30 may be disposed between the light guide plate 20 and the bottom chassis 10, and may extend from the lower surface to the side surface of the light guide plate 20.

Here, the reflector 30 is not disposed on the lower surface of the substrate 54 of the light source module 50. However, according to circumstance, the reflector 30 may be disposed on the lower surface of the substrate 54.

Further, the reflector 30 is disposed on at least one of the side surfaces of the second grooves 24 of the light guide plate 20 and the bottom surfaces of the second grooves 24.

Here, the reflector 30 may be formed of at least one of a metal and a metal oxide, and for example, may be formed of a metal or a metal oxide exhibiting high reflectivity, such as aluminum (Al), silver (Ag), gold (Au) or titanium oxide (Ti02).

The optical members 40 may be disposed on the upper surface of the light guide plate 20.

Here, the optical members 40 serve to diffuse light emitted through the light guide plate 20, and may have an uneven pattern disposed on the upper surface thereof to increase diffusion effects.

Further, the optical members 40 may include several layers, and the uneven pattern may be disposed on the surface of the uppermost layer or one layer.

The uneven pattern may have a stripe shape disposed along the light source modules 50.

Here, the uneven pattern includes protrusions protruding from the surface of the optical member 40, and the protrusions include first planes and second planes opposite each other. An angle between the first plane and the second plane may be obtuse or acute.

According to circumstance, the optical members 40 may include at least one sheet, i.e., may selectively include a diffusion sheet, a prism sheet, a brightness enhancement sheet, etc.

Here, the diffusion sheet serves to diffuse light emitted by the light sources, the prism sheet serves to guide diffused light to a light emission area, and the brightness enhancement sheet serves to enhance brightness of light.

FIG. 2 is a cross-sectional view illustrating a position at which the first groove of the light guide plate is disposed.

As shown in FIG. 2, the first groove 70 may be disposed on the upper surface of the light guide plate 20, and the second groove 24 may be disposed on the lower surface of the light guide plate 20.

Further, the light source module 50 is disposed within the second groove 24, and the light sources 52 of the light source module 50 may face the side surface of the second groove 24.

The first groove 70 may be disposed on the upper surface of the light guide plate 20 at one side of the second groove 24 and may be disposed between the light sources 52 of the light source module 50, simultaneously.

Here, the maximum depth of the first groove 70 means a distance d1 from the upper surface of the light guide plate 20 to the lowermost surface of the first groove 70. The maximum depth of the first groove 70 may be smaller than a distance d2 from the upper surface of the light guide plate 20 to the second groove 24.

If the maximum depth of the first groove 70 is greater than the distance d2 from the upper surface of the light guide plate 20 to the second groove 24, light is blocked by the first groove 70 and thus is not diffused to the light guide plate 20, thereby lowering brightness.

Therefore, if the depth of the first groove 70 is properly adjusted, light may be refracted by the first groove 70 and be diffused to the inside and outside of the light guide plate 20, and thus dark regions generated at areas between adjacent light sources 52 may be reduced.

For example, the depth of the first groove 70 may be about 0.1∼0.5 mm.

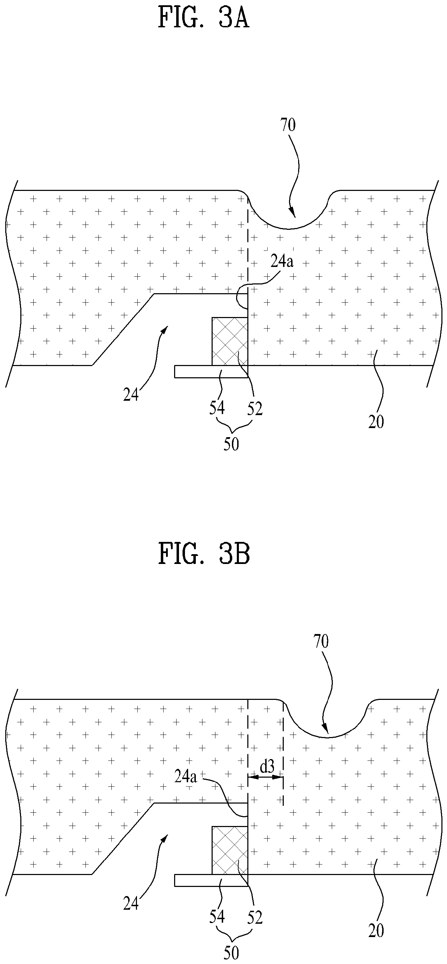

FIG. 3A to 3C are cross-sectional views illustrating position relations between first grooves and second grooves of the light guide plate.

As shown in FIG. 3A, one side end of the first groove 70 disposed on the upper surface of the light guide plate 20 may be disposed on an extension line extending from the side surface 24a of the second groove 24.

The reason for this is that dark regions generated between the light sources 52 of the light source module 50 may be generated at the area of the side surface 24a of the second groove 24.

Next, as shown in FIG. 3B, one side end of the first groove 70 disposed on the upper surface of the light guide plate 20 may be separated from an extension line extending from the side surface 24a of the second groove 24 by a designated interval d3.

The reason for this is that dark regions generated between the light sources 52 of the light source module 50 may be generated at an area separated from the area of the side surface 24a of the second groove 24.

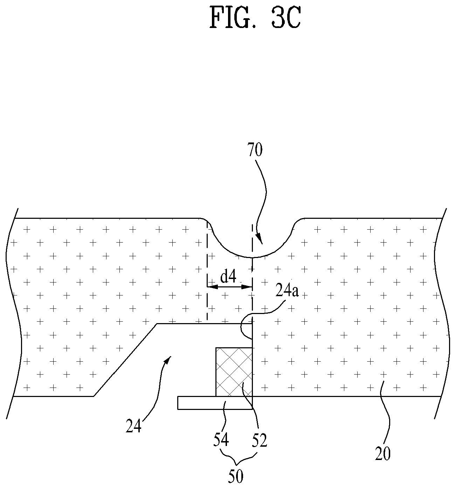

Next, as shown in FIG. 3C, the first groove 70 disposed on the upper surface of the light guide plate 20 and the second groove 24 disposed on the lower surface of the light guide plate 20 may partially overlap each other by a designated interval d4.

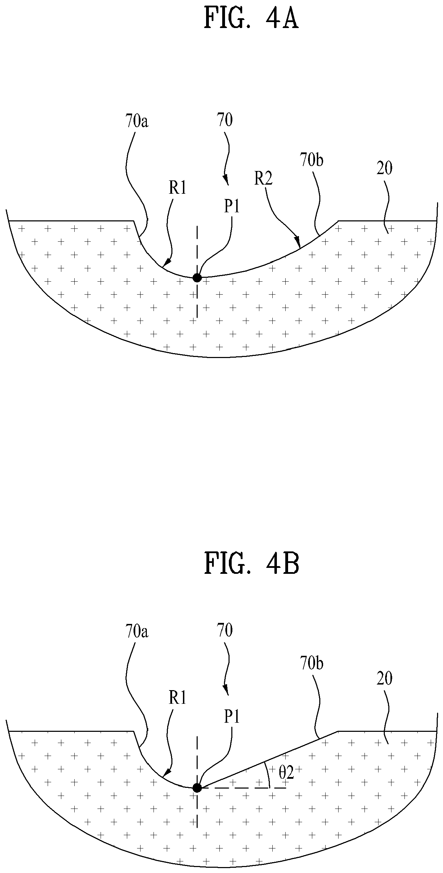

FIGs. 4A to 4E are cross-sectional views illustrating various shapes of the first grooves of the light guide plate.

As shown in FIG. 4A, the cross-section of the first groove 70 disposed on the upper surface of the light guide plate 20 may include a first inclined surface 70a and a second inclined surface 70b meeting at one point P1.

Here, the first inclined surface 70a of the first groove 70 may be a concave surface having a first curvature R1, and the second inclined surface 70b of the first groove 70 may be a concave surface having a second curvature R2.

The first curvature R1 and the second curvature R2 may be different, or be equal.

If the first curvature R1 and the second curvature R2 are different, the first curvature R1 may be greater than the second curvature R2.

Next, as shown in FIG. 4B, the cross-section of the first groove 70 disposed on the upper surface of the light guide plate 20 may include a first inclined surface 70a and a second inclined surface 70b meeting at one point P1.

Here, the first inclined surface 70a of the first groove 70 may be a concave surface having a first curvature R1, and the second inclined surface 70b of the first groove 70 may be a flat surface inclined at a designated angle θ2 with respect to the upper surface of the light guide plate 20.

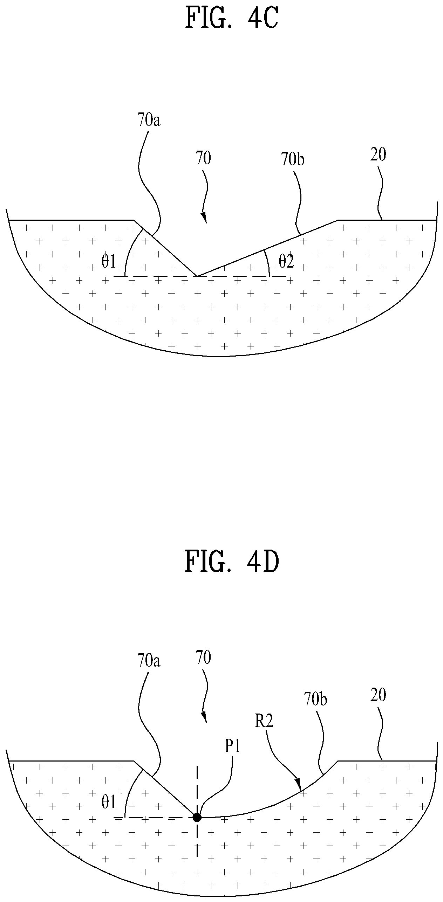

Next, as shown in FIG. 4C, the cross-section of the first groove 70 disposed on the upper surface of the light guide plate 20 may include a first inclined surface 70a and a second inclined surface 70b meeting at one point P1.

Here, the first inclined surface 70a of the first groove 70 may be a flat surface inclined at a designated angle θ1 with respect to the upper surface of the light guide plate 20, and the second inclined surface 70b of the first groove 70 may be a flat surface inclined at a designated angle θ2 with respect to the upper surface of the light guide plate 20.

The first angle θ1 and the second angle θ2 may be different, or be equal.

If the first angle θ1 and the second angle θ2 are different, the first angle θ1 may be greater than the second angle θ2.

Next, as shown in FIG. 4D, the cross-section of the first groove 70 disposed on the upper surface of the light guide plate 20 may include a first inclined surface 70a and a second inclined surface 70b meeting at one point P1.

Here, the first inclined surface 70a of the first groove 70 may be a flat surface inclined at a designated angle θ2 with respect to the upper surface of the light guide plate 20, and the second inclined surface 70b of the first groove 70 may be a concave surface having a second curvature R2.

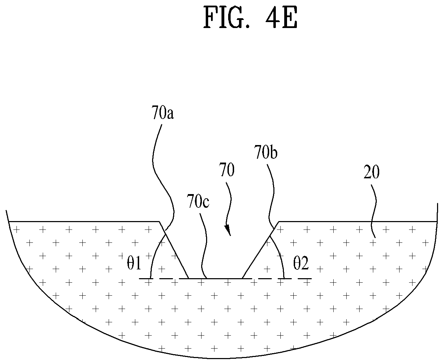

Next, as shown in FIG. 4E, the cross-section of the first groove 70 disposed on the upper surface of the light guide plate 20 may include a first inclined surface 70a and a second inclined surface 70b, and a flat surface 70c parallel with the upper surface of the light guide plate 20 may be disposed between the first and second inclined surfaces 70a and 70b.

Here, the first inclined surface 70a of the first groove 70 may be a flat surface inclined at a designated angle θ1 with respect to the upper surface of the light guide plate 20, and the second inclined surface 70b of the first groove 70 may be a flat surface inclined at a designated angle θ2 with respect to the upper surface of the light guide plate 20.

The first angle θ1 and the second angle θ2 may be different, or be equal.

If the first angle θ1 and the second angle θ2 are different, the first angle θ1 may be greater than the second angle θ2.

For example, the first and second angle θ1 and θ2 may be about 9∼89 degrees.

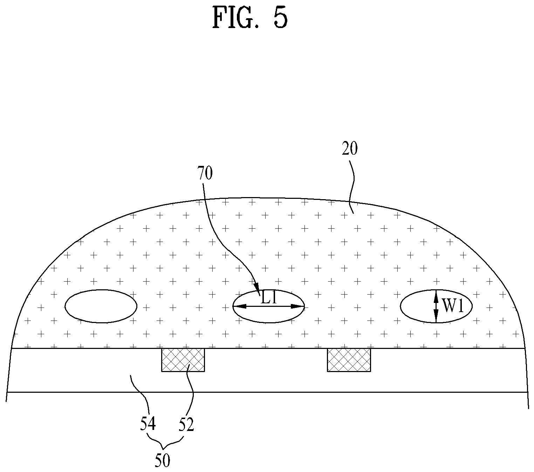

FIG. 5 is a plan view illustrating the positions of the first grooves of the light guide plate.

As shown in FIG. 5, the first grooves 70 disposed on the upper surface of the light guide plate 20 are separated from each other at a designated interval greater than zero, and be disposed in front of the light source module 50.

The respective first grooves 70 are disposed between the light sources 52 of the light source module 50.

Here, the length L1 of the first groove 70 may mean a distance between both ends of the first groove 70 disposed in the first direction (the direction in which the light sources 52 of the light source module 50 are arranged). The length L1 of the first groove 70 may be about 3∼7 mm.

Further, the width W1 of the first groove 70 may mean a distance between both ends of the first groove 70 disposed in the second direction perpendicular to the first direction. The width W1 of the first groove 70 may be about 1∼4 mm.

The length L1 and the width W1 of the first groove 70 may be smaller than the distance between the light sources 52 of the light source module 50.

Therefore, the length L1 and the width W1 of the first groove 70 may be varied according to the distance between the light sources 52 of the light source module 50.

When the first grooves 70 are disposed at dark regions generated between adjacent light sources 52, as described above, light is refracted by the first grooves 70 and thus the dark regions may be reduced, and uniform brightness may be provided.

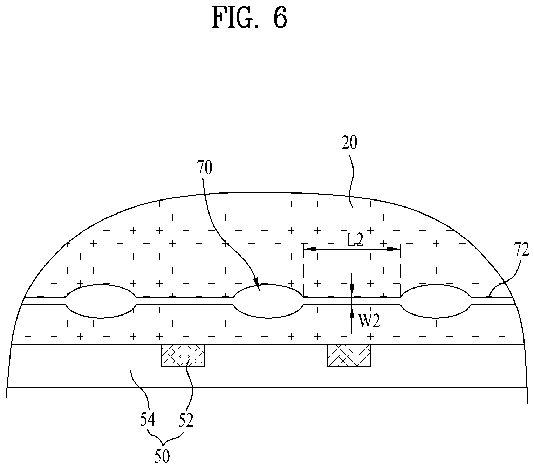

FIG. 6 is a plan view illustrating the positions of third grooves of the light guide plate.

As shown in FIG. 6, third grooves 72 may be additionally disposed between adjacent first grooves 70 of the light guide plate 20.

Here, the third grooves 72 may be disposed at positions corresponding to the respective light sources 52 of the light source module 50.

Further, the third grooves 72 may be connected to the adjacent first grooves 70.

The length L2 of the third groove 72 means a distance between adjacent first grooves 70. The length L2 of the third groove 72 may be smaller than the length L1 of the first groove 70 and be greater than the length of the light source 52.

Further, the width W2 of the third groove 72 means a distance between both ends of the third groove 72 in a direction perpendicular to the lengthwise direction of the third groove 72. The width W2 of the third groove 72 may be smaller than the width W1 of the first groove 70.

The depth of the third groove 72 may be equal to the depth of the first groove 70, or may be different from the depth of the first groove 70 according to circumstance.

For example, the depth of the third groove 72 may be smaller than the depth of the first groove 70.

Here, a ratio of the depth of the third groove 72 to the depth of the first groove 70 may be about 1:1.5∼3.

The reason why the third grooves 72 are disposed, as described above, is that, since adjacent first grooves 70 may cause a brightness difference, in order to provide uniform brightness, the brightness difference between the first grooves 70 needs to be reduced.

Therefore, by forming the third grooves 72 between the first grooves 70, the brightness difference may be prevented and dark regions generated in front of the light sources 52 may be reduced.

Further, the third groove 72 may be separated from an extension line extending from one side of the second groove 24 so as to prevent overlap of the third grooves 72 with the second grooves 24 disposed on the lower surface of the light guide plate 20.

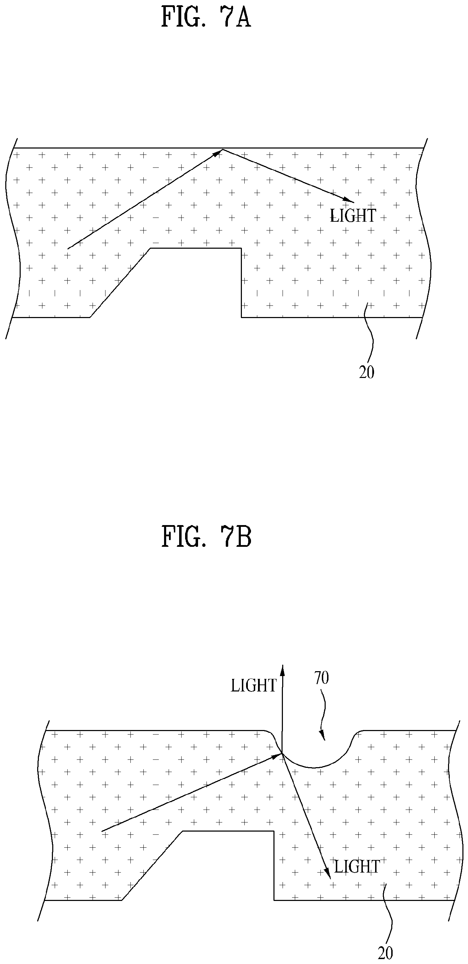

FIGs. 7A and 7B are views illustrating refraction of light according to presence and absence of the first groove of the light guide plate.

FIG. 7A illustrates refraction of light if no first groove 70 is disposed on the upper surface of the light guide plate 20, and FIG. 7B illustrates refraction of light if the second groove 24 is disposed on the upper surface of the light guide plate 20.

As shown in FIG. 7A, if no first groove 70 is disposed on the upper surface of the light guide plate 20, light diffused to the inside of the light guide plate 20 is reflected by the upper surface of the light guide plate 20 and is then returned to the inside of the light guide plate 20.

Therefore, dark regions generated between the light sources may remain.

However, as shown in FIG. 7B, if the first groove 70 is disposed on the upper surface of the light guide plate 20, a portion of light diffused to the inside of the light guide plate 20 may be refracted to the outside of the light guide plate 20 by the first groove 70 disposed on the upper surface of the light guide plate 20, and the remaining portion of light may be returned to the inside of the light guide plate 20.

Therefore, dark regions generated between the light sources may be reduced by light refracted to the outside of the light guide plate 20 by the first groove 70.

As described above, the present inventions form grooves at dark regions on the upper surface of the light guide plate, and thus reduce dark regions, thereby being capable of providing a backlight unit having uniform brightness.

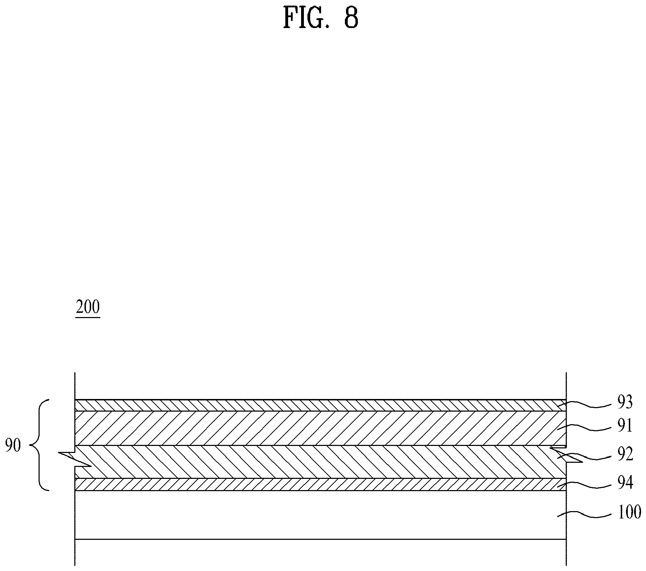

FIG. 8 is a cross-sectional view illustrating a display module having a backlight unit in accordance with one present invention.

As shown in FIG. 8, a display module 200 includes a display panel 90 and a backlight unit 100.

The display panel 90 includes a color filter substrate 91 and a thin film transistor (TFT) substrate 92 disposed opposite each other and bonded to each other to maintain a uniform cell gap, and a liquid crystal layer (not shown) may be interposed between the two substrates 91 and 92.

The color filter substrate 91 includes a plurality of pixels including red (R), green (G) and blue (B) sub-pixels, and generates an image corresponding to red, green or blue if light is applied to the color filter substrate 91.

Although the pixels may include red (R), green (G) and blue (B) sub-pixels, the present invention is not limited thereto and red (R), green (G), blue (B) and white (W) sub-pixels may form one pixel.

The TFT substrate 92 includes switching elements, and may switch pixel electrodes (not shown).

For example, a common electrode (not shown) and the pixel electrodes may change arrangement of molecules of the liquid crystal layer based on a designated voltage applied from the outside.

The liquid crystal layer may include a plurality of liquid crystal molecules, and arrangement of the liquid crystal molecules is changed due to a voltage difference between the pixel electrodes and the common electrode.

Thereby, light generated from the backlight unit 100 may be incident upon the color filter substrate 90 in response to change of molecular arrangement of the liquid crystal layer.

Further, an upper polarizing plate 93 and a lower polarizing plate 94 may be disposed on the upper surface and the lower surface of the display panel 90, and more particularly, the upper polarizing plate 93 may be disposed on the upper surface of the color filter substrate 91 and the lower polarizing plate 94 may be disposed on the lower surface of the TFT substrate 92.

Although not shown in the drawings, gate and data driving units generating driving signals to drive the display panel 90 may be provided on the side surface of the display panel 90.

As shown in FIG. 8, the display module 200 may be disposed by disposing the backlight unit 100 close to the display panel 90.

For example, the backlight unit 100 may be fixed to the lower surface of the display panel 90, more particularly be attached to the lower polarizing plate 94, and for this purpose, an adhesive layer (not shown) may be disposed between the lower polarizing plate 94 and the backlight unit 100.

By attaching the backlight unit 100 to the display panel 90, as described above, the overall thickness of the display apparatus is reduced, and thus the external appearance of the display apparatus may be improved. Further, additional structures to fix the backlight unit 100 are removed, and thus the structure and manufacturing process of the display apparatus may be simplified.

Further, by removing a space between the backlight unit 100 and the display panel 90, malfunction of the display apparatus or deterioration of the quality of a displayed image due to invasion of foreign substances into the space may be prevented.

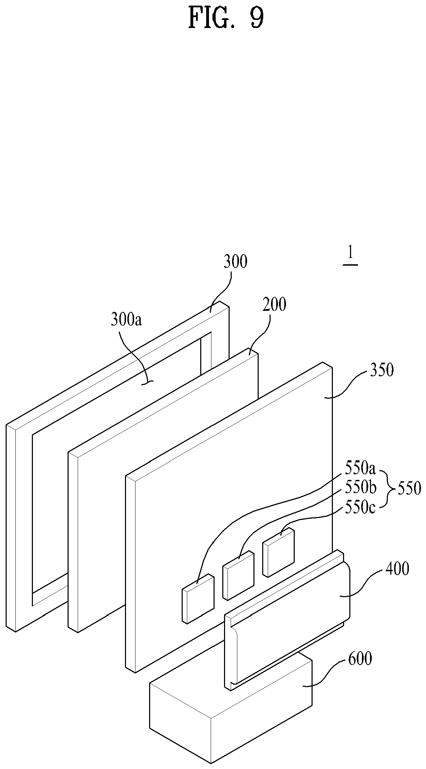

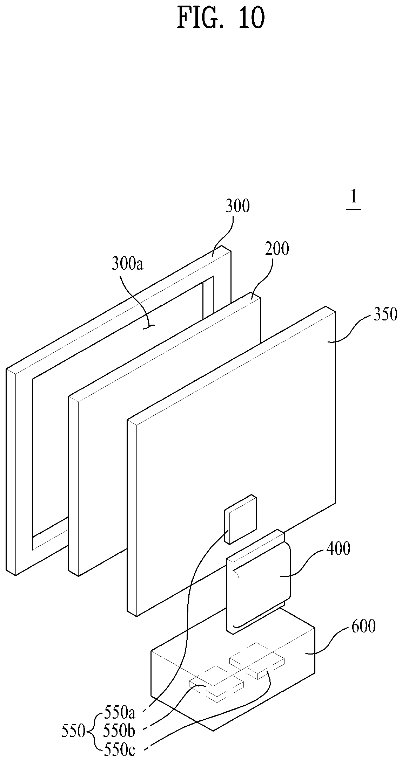

FIGs. 9 and 10 are views respectively illustrating display apparatuses in accordance with present inventions.

First, as shown in FIG. 9, a display apparatus 1 includes a display module 200, a front cover 300 and a back cover 350 surrounding the display module 200, a driving unit 550 provided on the back cover 350, and a driving unit cover 400 surrounding the driving unit 550.

The front cover 300 may include a front panel (not shown) disposed of a transparent material transmitting light. The front panel which is separated from the display module 200 at a designated interval protects the display module 200 and transmits light emitted from the display module 200, thereby allowing an image displayed on the display module 200 to be seen from the outside.

Further, the front cover 300 may be a flat plate without a window 300a.

In this case, the front cover 300 may be disposed of a transparent material transmitting light, for example, of injection molded plastic.

If the front cover 300 is a flat plate, a frame may be removed from the front cover 300.

The back cover 350 may be connected to the front cover 300 to protect the display module 200.

The driving unit 550 may be disposed on one surface of the back cover 350.

The driving unit 550 may include a driving control unit 550a, a main board 550b and a power supply unit 550c.

The driving control unit 550a may be a timing controller, i.e., a driver to control operation timing of respective driver ICs of the display module 200, the main board 550b may be a driver to transmit a V-sync, an H-sync and R, G and B resolution signals to the timing controller, and the power supply unit 550c may be a driver to apply power to the display module 200.

The driving unit 550 may be provided on the back cover 350 and be surrounded by the driving unit cover 400.

The back cover 350 may be provided with a plurality of holes through which the display module 200 and the driving unit 550 are connected to each other, and a stand 600 to support the display apparatus 1 may be provided.

Next, as shown in FIG. 10, the driving control unit 550a of the driving unit 550 may be provided on the back cover 350, and the main board 550b and the power supply unit 550c of the driving unit 550 may be provided on the stand 600.

Further, the driving unit cover 400 may surround only the driving control unit 550a provided on the back cover 350.

Although the present inventions describe the main board 550b and the power supply unit 550c as being separately provided, the main board 550b and the power supply unit 550c may be integrated into one board.

Another present invention may implement a display apparatus, an indication apparatus or an illumination system including the light guide plate having the first and second grooves and the light source modules described in accordance with the above-described present inventions, and, for example, the illumination system may include a lamp or a streetlight.

Such an illumination system may be used as an illumination lamp which concentrates light emitted from plural LEDs, particularly used as a lamp (down light) which is embedded in the ceiling or the wall of a building and is installed to expose an opening of a shade.

As is apparent from the above description, a backlight unit and a display apparatus using the same in accordance with one present invention form grooves at areas where dark regions are generated, thereby reducing the dark regions and thus allowing the backlight unit to have uniform brightness.

Although present inventions have been described with reference to a number of illustrative present inventions thereof, it should be understood that numerous other modifications and present inventions can be devised by those skilled in the art that will fall within the scope of the appended claims. More particularly, various variations and modifications are possible in the component parts and/or arrangements of the subject combination arrangement within the scope of the appended claims.

## Claims

1. A backlight unit comprising:
a light guide plate (20) with an upper surface and a lower surface opposite to each other, a reflector (30) disposed on the lower surface of the light guide plate (20), said light guide plate (20) including a plurality of first grooves (70) and at least one second groove (24), at least one light source module (50) being disposed within said at least one second groove (24), said at at least one light source module (50) comprising a substrate (54) and a plurality of light sources (52) arranged in a first direction, wherein:
said first grooves (70) are disposed at dark regions generated between adjacent light sources (52) on said upper surface of said light guide plate (20), and said at least one second groove (24) is disposed on said lower surface of said light guide plate (20);
wherein
said first grooves (70) are disposed in said first direction in which said light sources (52) of said at least one light source module (50) are arranged; and wherein adjacent groves of said plurality of first grooves are separated from each other at a first interval of a predefined length bigger than zero;
each of said plurality of first grooves (70) disposed in the first direction is arranged between adjacent light sources (52) of said at least one light source module (50); **characterized in that** the second grooves (24) have a trapezoidal cross-section, and **in that** the reflector (30) is disposed on at least one of the side surfaces of the second grooves (24) of the light guide plate (20) and the bottom surfaces of the second grooves (24).

2. The backlight unit according to claim 1, wherein the cross-section of each of said plurality of first grooves (70) includes a first inclined surface (70a) and a second inclined surface (70b) meeting at one point.

3. The backlight unit according to any one of claims 1 to 2, wherein the cross-section of each of said plurality of first grooves (70) includes a first inclined surface (70a) and a second inclined surface (70b), and a flat surface (70c) parallel with the upper surface of the light guide plate (20) is disposed between the first and second inclined surfaces (70a, 70b).

4. The backlight unit according to any one of claims 1 to 3, wherein the maximum depth of said plurality of first grooves (70) is smaller than a distance from said upper surface of said light guide plate (20) to said at least one second groove (24).

5. The backlight unit according to any one of claims 1 to 4, wherein the length of each of said plurality of first grooves (70) is a distance between both ends of said first groove (70) disposed in said first direction, the width of each of said first grooves (70) is a distance between both ends of said first groove (70) disposed in a second direction perpendicular to said first direction, and the length and width of each of said plurality of first grooves (70) are smaller than a distance between adjacent light sources (52) of said light source module (50).

6. The backlight unit according to claim 1 or 4, wherein said light guide plate (20) further includes third grooves (72), each of said third grooves being disposed between adjacent groves of said plurality of first grooves (70).

7. The backlight unit according to claim 6, wherein said third grooves (72) are disposed corresponding to the respective light sources (52) of said at least one light source module (50).

8. The backlight unit according to claim 6 or 7, wherein the length and the width of each of said third grooves (72) are smaller than the length and the width of each of said plurality of first grooves (70), respectively.

9. The backlight unit according to any one of claims 6 to 8, wherein the depth of each of said third grooves (72) is smaller than the depth of each of said plurality of first grooves (70), and a ratio of the depth of the third grooves (72) to the depth of the first grooves (70) is 1:1.5∼3.

10. The backlight unit according to any one of claims 6 to 8, wherein each of the third grooves (72) is separated from one side of each of said at least one second groove (24) by a designated interval.

11. The backlight unit according to any one of claims 6 to 10, wherein the length of each of said third grooves (72) is greater than the length of the respective light source (52) of said light source module (50).

12. A display apparatus comprising:
a display panel (90); and
a backlight unit as claimed in any one of claims 1 to 11, said unit irradiating light onto said display panel (90).

## Patentansprüche

1. Hintergrundbeleuchtungseinheit umfassend:
eine Lichtführungsplatte (20) mit einer oberen Oberfläche und einer unteren Oberfläche, die einander gegenüberliegend sind, einen Reflektor (30), der an der unteren Oberfläche der Lichtführungsplatte (20) angeordnet ist,
wobei die Lichtführungsplatte (20) eine Vielzahl von ersten Nuten (70) und wenigstens eine zweite Nut (24) umfasst, wobei wenigstens ein Lichtquellenmodul (50) innerhalb der wenigstens einen zweiten Nut (24) angeordnet ist, wobei das wenigstens eine Lichtquellenmodul (50) ein Substrat (54) und eine Vielzahl von Lichtquellen (52) umfasst, die in einer ersten Richtung angeordnet sind, wobei:
die ersten Nuten (70) in dunklen Bereichen angeordnet sind, die zwischen angrenzenden Lichtquellen (52) an der oberen Oberfläche der Lichtführungsplatte (20) erzeugt werden, und die wenigstens eine zweite Nut (24) an der unteren Oberfläche der Lichtführungsplatte (20) angeordnet ist;
wobei
die ersten Nuten (70) in der ersten Richtung angeordnet sind, in der die Lichtquellen (52) des wenigstens einen Lichtquellenmoduls (50) angeordnet sind; und wobei angrenzende Nuten der Vielzahl von ersten Nuten in einem ersten Abstand einer vordefinierten Länge, die größer als Null ist, voneinander getrennt sind;
jede der Vielzahl von ersten Nuten (70), die in der ersten Richtung angeordnet sind, zwischen angrenzenden Lichtquellen (52) des wenigstens einen Lichtquellenmoduls (50) angeordnet ist;
**dadurch gekennzeichnet, dass** die zweiten Nuten (24) einen trapezförmigen Querschnitt aufweisen, und dass der Reflektor (30) an wenigstens einer der Seitenoberflächen der zweiten Nuten (24) der Lichtführungsplatte (20) und der Bodenoberflächen der zweiten Nuten (24) angeordnet ist.

2. Hintergrundbeleuchtungseinheit nach Anspruch 1, wobei der Querschnitt von jeder der Vielzahl von ersten Nuten (70) eine erste geneigte Oberfläche (70a) und eine zweite geneigte Oberfläche (70b) umfasst, die sich an einem Punkt treffen.

3. Hintergrundbeleuchtungseinheit nach einem der Ansprüche 1 bis 2, wobei der Querschnitt von jeder der Vielzahl von ersten Nuten (70) eine erste geneigte Oberfläche (70a) und eine zweite geneigte Oberfläche (70b) umfasst, und eine flache Oberfläche (70c), die parallel zur oberen Oberfläche der Lichtführungsplatte (20) ist, zwischen der ersten und der zweiten geneigten Oberfläche (70a, 70b) angeordnet ist.

4. Hintergrundbeleuchtungseinheit nach einem der Ansprüche 1 bis 3, wobei die maximale Tiefe der Vielzahl von ersten Nuten (70) kleiner als ein Abstand von der oberen Oberfläche der Lichtführungsplatte (20) zu der wenigstens einen zweiten Nut (24) ist.

5. Hintergrundbeleuchtungseinheit nach einem der Ansprüche 1 bis 4, wobei die Länge von jeder der Vielzahl von ersten Nuten (70) ein Abstand zwischen beiden Enden der ersten Nut (70) ist, die in der ersten Richtung angeordnet sind, die Breite von jeder der ersten Nuten (70) ein Abstand zwischen beiden Enden der ersten Nut (70) ist, die in einer zu der ersten Richtung senkrechten zweiten Richtung angeordnet sind, und die Länge und Breite von jeder der Vielzahl von ersten Nuten (70) kleiner als ein Abstand zwischen angrenzenden Lichtquellen (52) des Lichtquellenmoduls (50) ist.

6. Hintergrundbeleuchtungseinheit nach Anspruch 1 oder 4, wobei die Lichtführungsplatte (20) ferner dritte Nuten (72) umfasst, wobei jede der dritten Nuten zwischen angrenzenden Nuten der Vielzahl von ersten Nuten (70) angeordnet ist.

7. Hintergrundbeleuchtungseinheit nach Anspruch 6, wobei die dritten Nuten (72) entsprechend den jeweiligen Lichtquellen (52) des wenigstens einen Lichtquellenmoduls (50) angeordnet sind.

8. Hintergrundbeleuchtungseinheit nach Anspruch 6 oder 7, wobei die Länge und die Breite von jeder der dritten Nuten (72) kleiner als die Länge bzw. die Breite von jeder der Vielzahl von ersten Nuten (70) sind.

9. Hintergrundbeleuchtungseinheit nach einem der Ansprüche 6 bis 8, wobei die Tiefe von jeder der dritten Nuten (72) kleiner als die Tiefe von jeder der Vielzahl von ersten Nuten (70) ist, und ein Verhältnis der Tiefe der dritten Nuten (72) zur Tiefe der ersten Nuten (70) 1:1,5∼3 ist.

10. Hintergrundbeleuchtungseinheit nach einem der Ansprüche 6 bis 8, wobei jede der dritten Nuten (72) von einer Seite von jeder der wenigstens einen zweiten Nut (24) um ein bestimmtes Intervall getrennt ist.

11. Hintergrundbeleuchtungseinheit nach einem der Ansprüche 6 bis 10, wobei die Länge von jeder der dritten Nuten (72) größer als die Länge der jeweiligen Lichtquelle (52) des Lichtquellenmoduls (50) ist.

12. Anzeigevorrichtung umfassend:
ein Anzeigefeld (90); und
eine Hintergrundbeleuchtungseinheit nach einem der Ansprüche 1 bis 11, wobei die Einheit Licht auf das Anzeigefeld (90) einstrahlt.

## Revendications

1. Une unité de rétro-éclairage comprenant :
une plaque (20) de guidage de lumière ayant une surface supérieure et une surface inférieure opposées l'une à l'autre, un réflecteur (30) disposé sur la surface inférieure de la plaque (20) de guidage de lumière, ladite plaque (20) de guidage de lumière comprenant une pluralité de premières rainures (70) et au moins une deuxième rainure (24), au moins un module (50) formant source de lumière étant disposé dans ladite au moins une deuxième rainure (24), ledit au moins un module (50) formant source de lumière comprenant un substrat (54) et une pluralité de sources de lumière (52) disposées dans une première direction ;
lesdites premières rainures (70) étant agencées dans des régions sombres générées entre des sources de lumière (52) adjacentes sur ladite surface supérieure de ladite plaque (20) de guidage de lumière, et ladite au moins une deuxième rainure (24) étant agencée sur ladite surface inférieure de ladite plaque (20) de guidage de lumière ;
lesdites premières rainures (70) étant agencées selon ladite première direction selon laquelle lesdites sources de lumière (52) dudit au moins un module (50) formant source de lumière sont agencées ; et des rainures adjacentes de ladite pluralité de premières rainures étant séparées les unes des autres selon un premier intervalle d'une longueur prédéfinie supérieure à zéro ;
chaque rainure faisant partie de ladite pluralité de premières rainures (70) agencées dans la première direction étant agencée entre des sources de lumière (52) adjacentes dudit au moins un module (50) formant source de lumière ; **caractérisé en ce que** les deuxièmes rainures (24) ont une section transversale trapézoïdale, et **en ce que** le réflecteur (30) est agencé sur au moins une parmi : les surfaces latérales des deuxièmes rainures (24) de la plaque (20) formant guide de lumière et les surfaces inférieures des deuxièmes rainures (24).

2. L'unité de rétro-éclairage selon la revendication 1, dans laquelle la section transversale de chacune des premières rainures faisant partie de ladite pluralité de premières rainures (70) comprend une première surface inclinée (70a) et une deuxième surface inclinée (70b) se rencontrant en un point.

3. L'unité de rétro-éclairage selon l'une quelconque des revendications 1 à 2, dans laquelle la section transversale de chaque première rainure faisant partie de ladite pluralité de premières rainures (70) comprend une première surface inclinée (70a) et une deuxième surface inclinée (70b), et une surface plane (70c) parallèle à la surface supérieure de la plaque (20) de guidage de lumière est agencée entre les première et la deuxième surfaces inclinées (70a, 70b).

4. L'unité de rétro-éclairage selon l'une quelconque des revendications 1 à 3, dans laquelle la profondeur maximale de ladite pluralité de premières rainures (70) est inférieure à une distance allant de ladite surface supérieure de ladite plaque (20) de guidage de lumière à ladite au moins une deuxième rainure (24).

5. L'unité de rétro-éclairage selon l'une quelconque des revendications 1 à 4, dans laquelle la longueur de chaque première rainure faisant partie de ladite pluralité de premières rainures (70) est une distance s'étendant entre les deux extrémités de ladite première rainure (70) agencée dans ladite première direction, la largeur de chacune desdites premières rainures (70) est une distance s'étendant entre les deux extrémités de ladite première rainure (70) agencée selon une deuxième direction perpendiculaire à ladite première direction, et la longueur et la largeur de chaque première rainure faisant partie de ladite pluralité de premières rainures (70) sont inférieures à une distance s'étendant entre des sources lumineuses (52) adjacentes dudit module (50) formant source de lumière.

6. L'unité de rétro-éclairage selon la revendication 1 ou la revendication 4, dans laquelle ladite plaque (20) de guidage de lumière comprend en outre des troisième rainures (72), chacune desdites troisième rainures étant agencée entre des rainures adjacentes faisant partie de ladite pluralité de premières rainures (70).

7. L'unité de rétro-éclairage selon la revendication 6, dans laquelle lesdites troisièmes rainures (72) sont agencées en correspondance avec les sources lumineuses (52) respectives dudit au moins un module (50) formant source de lumière.

8. L'unité de rétro-éclairage selon la revendication 6 ou la revendication 7, dans laquelle la longueur et la largeur de chacune desdites troisièmes rainures (72) sont plus petites que respectivement la longueur et la largeur de chaque première rainure faisant partie de ladite pluralité de premières rainures (70).

9. L'unité de rétro-éclairage selon l'une quelconque des revendications 6 à 8, dans laquelle la profondeur de chacune desdites troisièmes rainures (72) est inférieure à la profondeur de chaque première rainure faisant partie de ladite pluralité de premières rainures (70), et un rapport entre la profondeur des troisièmes rainures (72) et la profondeur des premières rainures (70) est de 1:1,5∼3.

10. L'unité de rétro-éclairage selon l'une quelconque des revendications 6 à 8, dans laquelle chacune des troisièmes rainures (72) est séparée d'un côté de chacune desdites au moins une deuxième rainure (24) par un intervalle désigné.

11. L'unité de rétro-éclairage selon l'une quelconque des revendications 6 à 10, dans laquelle la longueur de chacune desdites troisièmes rainures (72) est supérieure à la longueur de la source de lumière respective (52) dudit module (50) formant source de lumière.

12. Un appareil d'affichage comprenant :
un panneau d'affichage (90) ; et
une unité de rétro-éclairage telle que revendiquée dans l'une quelconque des revendications 1 à 11, ladite unité irradiant de la lumière sur ledit panneau d'affichage (90).
